# EUROPEAN PATENT SPECIFICATION

(11) **EP 3 246 689 B1**
(45) Date of publication and mention of the grant of the patent: **21.08.2019**
(21) Application number: 16170629.6
(22) Date of filing: 20.05.2016
(51) Int. Cl.: G01M 13/045

(54) **METHOD AND SYSTEM FOR MONITORING MECHANICAL BEARING**
VERFAHREN UND SYSTEM ZUR ÜBERWACHUNG EINES MECHANISCHEN LAGERS
PROCÉDÉ ET SYSTÈME DE SURVEILLANCE DE PALIER MÉCANIQUE

(43) Date of publication of application: 22.11.2017
(73) Proprietor: ABB Schweiz AG, 5400 Baden (CH)
(72) Inventor: Alkkiomäki, Olli, 00380 Helsinki (FI); Särkimäki, Ville, 00380 Helsinki (FI)
(74) Representative: Kolster Oy Ab

(56) References cited:
- US-B1- 6 199 018

## Description

### FIELD OF THE INVENTION

The present invention relates to electric drive systems, and particularly to monitoring the condition of a mechanical bearing in an electric drive system.

### BACKGROUND OF THE INVENTION

Mechanical bearings are used in application of different kinds where two members move in relation to each other. These include electric motors and generators, gear boxes, rotatable roll apparatuses, and actuators, for example.

A bearing fault is a common cause for machine failure. Bearing faults may cause production disturbances and unexpected plant downtime resulting from machine failure. Therefore, it may be desirable to be able to constantly and in a reliable manner evaluate and/or predict the condition of the bearings of a machine.

Physical bearing damage may be caused by several reasons, but often the damage results in detectable vibrations on the motor shaft. Thus, predictive and preventive condition monitoring methods may monitor vibration of the motor shaft in order to detect a bearing damage. However, this approach requires vibration sensors which may reduce the robustness and cost-effectiveness of the system.

An example of a known method for diagnosing rotating machines is described in publication US6199018.

### BRIEF DESCRIPTION

An object of the present invention is to provide a method and an apparatus for implementing the method so as to alleviate the above disadvantages. The objects of the invention are achieved by a method and an arrangement which are characterized by what is stated in the independent claims. Preferred embodiments of the invention are disclosed in the dependent claims.

Condition monitoring of a mechanical bearing (e.g. motor bearing) is possible by analysing the internal motor control signals. When the bearing is coupled to an electric machine that is controlled by a frequency converter, for example, these signals may already be available on the frequency converter. The internal motor control signals may be used to estimate an angle of the magnetic flux. Based on the estimated angle, a time-domain representation of the angle may be generated, and a frequency analysis may be performed to the time-domain representation. The results of the frequency analysis may be monitored for fault signatures which may be represented by a predetermined selection of one or more frequency components of the flux angle. The condition of the bearing may then be determined on the basis of the magnitude of the at least one fault signature detected in the flux angle in the frequency domain.

With this approach, bearing damage can be detected without the use of external sensors.

### BRIEF DESCRIPTION OF THE DRAWINGS

In the following the invention will be described in greater detail by means of preferred embodiments with reference to the accompanying drawings, in which
Figure 1a to 1d show diagrams of an exemplary test setup in which artificial bearing currents were fed through a bearing of an electric motor in order to simulate deterioration of the bearing;
Figure 2 shows an exemplary data flow diagram of a bearing monitoring system according to the present disclosure;
Figure 3 shows an exemplary implementation of the method according to the present disclosure where the whole data analysis system is implemented on a frequency converter;
Figure 4 shows an exemplary implementation of the method according to the present disclosure where the data analysis system is an external data analysis system; and
Figure 5 shows an exemplary implementation of the method according to the present disclosure where the data analysis system is implemented as an external cloud computing service.

### DETAILED DESCRIPTION

The present disclosure describes a method for monitoring the condition (i.e. working order, the state of deterioration) of a mechanical bearing that is coupled to an electric machine. The mechanical bearing may be a bearing of the electric machine, for example. Alternatively, the method may be used for monitoring the condition of a bearing of a device coupled to the electric machine. The electric machine may operate as a motor or as a generator.

The electric machine may be a synchronous machine or an asynchronous machine. The electric machine may be controlled by a frequency converter which controls a rotating magnetic flux in the electric machine. The electric machine may be an induction motor, for example.

The method according to the present disclosure comprises estimating the flux angle, i.e. the angle of the magnetic flux. In flux-controlled frequency converters, estimated values of the flux angle may be directly available in the firmware of the frequency converter, for example. Alternatively, if an estimate of the rotating magnetic flux is not already directly available, it may be calculated on the basis of stator phase currents and voltages, for example.

Based on the estimated values of the flux angle, a time-domain representation of the flux angle may be generated, and a frequency analysis may be performed on this time-domain representation. During the frequency analysis, a frequency-domain representation of the angle of the magnetic flux may be calculated on the basis of the time-domain representation. The frequency analysis may produce a frequency-domain representation that represents magnitudes of one or more frequency components of the flux angle in the frequency domain.

A magnitude of at least one fault signature in the calculated frequency-domain representation may then be determined. The at least one fault signature may be in the form of a predetermined selection of one or more frequency components of the angle of the magnetic flux in the calculated frequency-domain representation, for example. In one embodiment, a third harmonic component in the frequency-domain representation may be used to represent the fault signature.

The condition of the bearing may be determined on the basis of the magnitude of the at least one fault signature. The magnitude of the third harmonic component in the frequency-domain representation may represent the magnitude of the at least one fault signature, for example. The magnitude of the fault signature may be calculated periodically, for example. The determined magnitude of the fault signature may be compared with a reference level. If the determined magnitude exceeds the reference level, the bearing may be considered to have faulted.

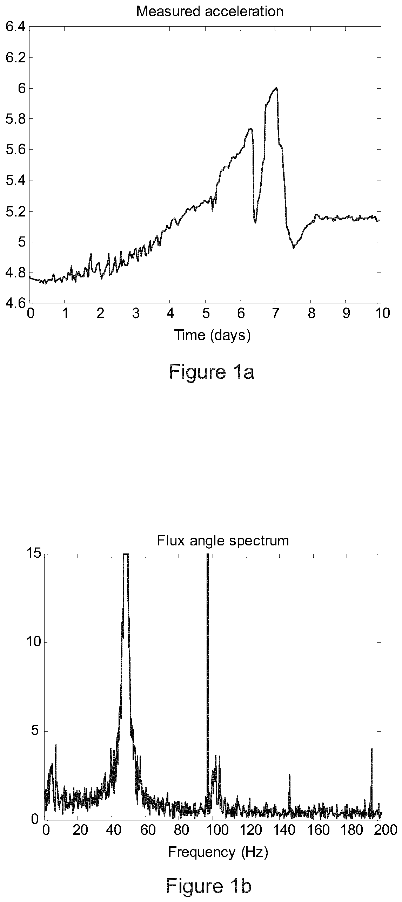

Figure 1a to 1d show diagrams of an exemplary test setup in which artificial bearing currents were fed through a bearing of an electric motor in order to simulate deterioration of the bearing. An accelerometer was attached on the body of the motor to measure vibration.

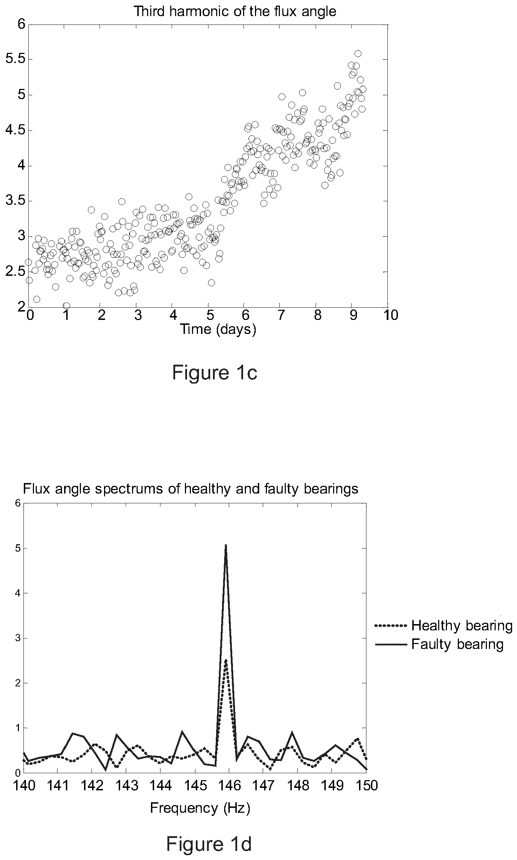

Figure 1a shows exemplary RMS values of the vibrations as a function of time. At the start of the test, no bearing current was fed through the bearings. However, after two days, the current was turned on to pass through the non-insulated bearing. The deterioration of the bearing is visible on the accelerometer measurements in Figure 1. The acceleration level rises quite steadily until six days when the bearing cage fails and parts of the bearing are detached.

Figure 1b shows an exemplary frequency-domain representation of the angle of the magnetic flux. In the frequency-domain representation, a peak representing a third harmonic of the flux angle can be seen around 146Hz.

Figure 1c shows an exemplary development of the magnitude of the third harmonic as a function of time. The variance in the size of the peak is relatively small and the peak grows gradually as the bearing fault develops.

Figure 1d shows an exemplary difference between a healthy bearing and a faulty bearing. The magnitudes of the healthy bearing and the faulty bearing differ significantly from each other. Thus, by estimating the third harmonic on the frequency converter, it is possible to detect a bearing fault without external sensors.

In the previous example, the third harmonic of the flux angle was used as the frequency-domain representation of the flux angle and the magnitude of the third harmonic was used as the magnitude of the fault signature. However, the method according to the present disclosure is not limited to this approach.

For example, a plurality of frequency components may alternatively form the fault signature. The frequency-domain representation of the flux angle may be in the form of a spectrum comprising a plurality of frequency components, and the magnitude of the fault signature may be determined on the basis of the magnitudes of the plurality of frequency components. For example, the fault signature may be represented by predetermined ratios between predetermined harmonic components (or other frequency components) of the flux angle. The strength of the fault signature in the frequency-domain representation may then be determined by determining the magnitudes of the predetermined harmonic components and by calculating how well the ratios between the harmonic components correspond with the predetermined ratios.

In the method according to the present disclosure, a time-domain representation of the flux angle may be generated on the basis of values of the estimated flux angle, and a frequency-domain representation of the flux angle may then be calculated on the basis of the time-domain representation. The time-domain representation of the flux angle may represent the flux angle in the complex plane as a function of time, for example. The real part of the time-domain representation may represent the cosine of the flux angle and the imaginary part of the value may represent the sine of the flux angle, for example. Alternatively, the time-domain representation may simply be in the form of the real part or the imaginary part (i.e. the sine or the cosine) of the flux angle as a function of time. Values of the estimated flux angle may be sampled periodically and samples of the time-domain representation of the flux angle may be generated on the basis of the values. The samples of the generated time-domain representation may be stored in a memory, for example.

The frequency-domain representation of the flux angle may then be calculated on the basis of the stored samples of the time-domain representation of the flux angle. The frequency-domain representation may be calculated by using the Fourier transform, for example. The harmonics can be estimated with Sparse Fast Fourier Transform (SFFT), for example. If only the third harmonic is needed, computationally lighter methods, such as FIR filtering, may also be used.

The method according to the present disclosure is not limited to detecting faulty bearings. The method may also be used for predicting future failures of the bearing, for example. History data of the magnitude of the fault signature may be gathered, and a trend of the magnitude of the fault signature may be estimated on the basis of the history data. For example, if the magnitude of the fault signature is periodically calculated, the values of the magnitudes may be stored in a memory, and a trend curve representing the magnitude of the fault signature as a function of time may be calculated on the basis of the stored values. The trend curve may be calculated by using known curve-fitting algorithms, such as the method of least squares. The trend curve may be utilized in determining an estimated time of failure for the bearing. For example, the trend curve may be compared to a reference level that indicates an imminent failure of the bearing. The condition of the bearing may then be determined on the basis of the comparison.

In order to determine a reference level for the imminent failure (or an already occurred failure), an identification run may be performed with a healthy bearing. During the identification run, a magnitude of a fault signature (e.g. the third harmonic of the flux angle) present in the healthy bearing may be determined. The reference level for the fault signature may then be determined on the basis of the determined magnitude. For example, the reference level and the detected magnitude of the fault signature present in the healthy bearing may be set to have a predetermined ratio between each other.

The present disclosure further describes a bearing monitoring system. The bearing monitoring system comprises a data gathering unit and a data analysis system which implement the method according to the present disclosure.

The data gathering unit may be configured to estimate the angle of a rotating magnetic flux of an electric machine arranged to be controlled by a frequency converter, to generate a time-domain representation of the flux angle on the basis of the values of the estimated angle, and to cause the time-domain representation to be sent to the data analysis system. The frequency converter controlling the electric machine may comprise the data gathering unit, for example. The data gathering unit may be implemented on a controller of the frequency converter, for example. The controller may comprise a computing device (such as a processor, an FPGA, or an ASIC) and a memory. The controller may also have other functions, such as controlling the motor, for example.

The data analysis system may be configured to receive a time-domain representation of an angle of a rotating magnetic flux of an electric machine coupled to a mechanical bearing and arranged to be controlled by a frequency converter. The data analysis system may further be configured to calculate a frequency-domain representation of the angle of the magnetic flux on the basis of the received time-domain representation, to determine a magnitude of at least one fault signature in the calculated frequency-domain representation, and to determine the condition of the bearing on the basis of the magnitude of the at least one fault signature.

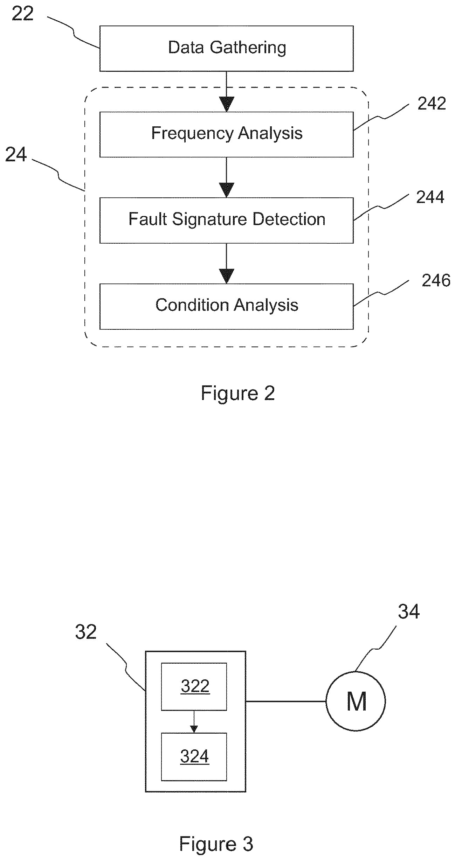

Figure 2 shows an exemplary data flow diagram of a bearing monitoring system according to the present disclosure. The monitoring system in Figure 2 comprises a data gathering unit 22 and a data analysis system 24.

The data gathering unit 22 estimates the angle of a rotating magnetic flux of an electric machine arranged to be controlled by a frequency converter, generates a time-domain representation of the flux angle on the basis of the values of the estimated angle, and causes the time-domain representation to be sent to the data analysis system 24.

The data analysis system 24 comprises three subunits: a frequency analysis unit 242, a fault signature detection unit 244, and a condition analysis unit 246.

The frequency analysis unit 242 receives the time-domain representation originating from the data gathering unit 242, calculates a frequency-domain representation of the angle of magnetic flux on the basis of the received time-domain representation, and causes the frequency-domain representation to be sent to the fault signature detection unit 244.

The fault signature detection unit 244 receives the frequency-domain representation originating from the frequency analysis unit 242, determines a magnitude of at least one fault signature in the calculated frequency-domain representation, and causes the magnitude of the at least one fault signature to be sent to the condition analysis unit 246. The at least one fault signature may be formed by a predetermined selection of one or more frequency components of the angle of the magnetic flux in the calculated frequency-domain representation, for example.

The condition analysis unit 246 receives the magnitude of the at least one fault signature originating from the fault signature detection unit 244 and determines the condition of the bearing on the basis of the magnitude of the at least one fault signature. Determining the condition may comprise predicting the development of the condition (e.g. deterioration of the bearing) over time. Based on the determined condition, the condition analysis unit 246 may send an indication of a present (or imminent) bearing fault to an end-user, for example. The condition analysis unit 246 may even automatically schedule maintenance on the basis of the determined condition.

The units of the data analysis system may be implemented in various ways. The data gathering unit 22 and the units of the data analysis system 24 may be implemented as software components, for example. The data gathering unit 22 and the units of the data analysis system 24 may be implemented on different parts of the monitoring system.

For example, the frequency converter may comprise the whole data analysis system. Figure 3 shows an exemplary implementation of the method according to the present disclosure where the whole data analysis system is implemented on a frequency converter. In Figure 3, a frequency converter 32 controls an electric machine in the form of an electric motor 34 that actuates a mechanical bearing (not shown in Figure 2). The bearing may be a part of the motor 34, or a part of a device coupled to (and actuated by) the motor.

The frequency converter comprises a data gathering unit 322 according to the present disclosure. The frequency converter further comprises a data analysis system 324 according to the present disclosure. The data gathering unit 322 uses motor control signals to estimate the flux angle, generates a time-domain representation of the flux angle on the basis of estimated values of the flux angle, and sends the time-domain representation to the data analysis system 324. The data analysis system 324 then determines, according to the present disclosure, the condition of the bearing.

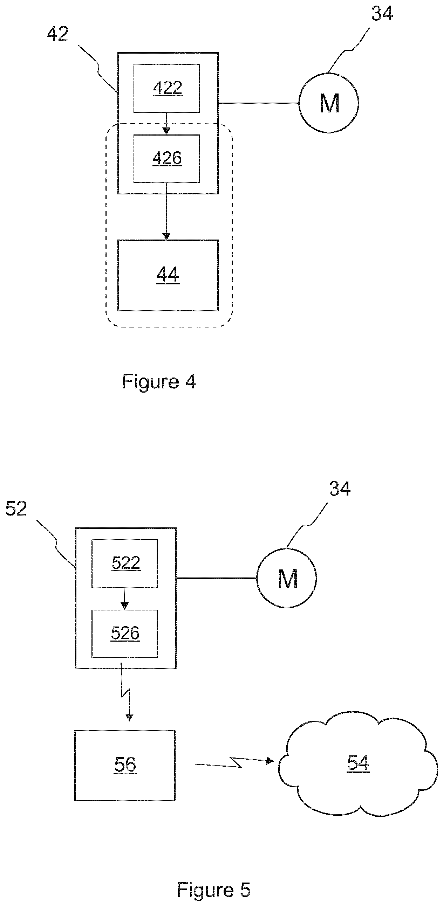

Alternatively, the data analysis system may partially or entirely be an external system. Figure 4 shows an exemplary implementation of the method according to the present disclosure where the data analysis system is an external data analysis system. In Figure 4, a frequency converter 42 controls an electric motor 34 in the same manner as in Figure 3.

The frequency converter 42 comprises data gathering unit 422 according to the present disclosure. The frequency converter 42 further comprises a connection unit 426 for transmitting the time-domain representation to an external data analysis system 44 according to the present disclosure. A computer may implement the external data analysis system 44, for example. The computer may be a laptop, a desktop computer, or a cluster of computer servers, for example. The connection unit 426 may connect to the computer via one or more known communication networks, such as Ethernet, for example.

The connection unit 426 may be an integral unit of the frequency converter 42. Alternatively, the connection unit 426 may be a detachable unit and the frequency converter 42 may further comprise a physical connection interface for connecting the connection unit 426 to the frequency converter 42.

The data analysis system may also partially or entirely be implemented as a cloud computing service. Figure 5 shows an exemplary implementation of the method according to the present disclosure where the data analysis system is implemented as an external cloud computing service. In Figure 5, a frequency converter 52 controls an electric motor 34 in the same manner as in Figure 3.

The frequency converter 52 comprises a data gathering unit 522 according to the present disclosure. The frequency converter 52 further comprises a connection unit 526 that is configured to establish a connection with an external communication device 56, and to cause the time-domain representation of the flux angle to be sent to the external communication device 56 in order to be forwarded to the external data analysis system 54.

The external communication device 56 may be a handheld communication device, such as a smart phone or a tablet computer. The connection unit 526 may communicate with the external communication device 56 via standard wireless communication protocols, for example. The connection unit 526 may establish the communication link via Bluetooth, ZigBee, near field communication (NFC), or infrared protocols, for example. The external communication device 56 may communicate with the cloud-based data analysis system 54 through wireless networks, such as cell phone networks or WLAN.

Units of the data analysis system (e.g. the frequency analysis unit, the fault signature detection unit, and the condition analysis unit) may also be divided into subsystems that are implemented on a plurality of devices. For example, the frequency converter may comprise a frequency analysis unit that calculates a third harmonic of the flux angle as the frequency-domain of the flux angle, and a fault signature detection unit that determines the magnitude of the fault signature on the basis of the third harmonic. The frequency converter may be configured to periodically send the magnitude of the fault signature to an external condition analysis unit which makes a decision on how to proceed on the basis of the received information.

Alternatively, if the frequency analysis unit and the fault signature detection unit use more computationally intensive approaches (e.g. when the fault signature comprises a plurality of frequency components), the frequency analysis unit and the fault signature detection unit may be implemented on an external system (such as a cloud computing service). The condition analysis system may be implemented on the frequency converter. The frequency converter may utilize its connection unit for receiving the magnitude of the fault signature originating from a cloud computing service, and determine the condition on the basis of the received magnitude. The condition analysis may also be implemented on a smart phone or a tablet computer with which the frequency converter communicates.

It will be obvious to a person skilled in the art that, as the technology advances, the inventive concept can be implemented in various ways. The invention and its embodiments are not limited to the examples described above but may vary within the scope of the claims.

## Claims

1. A method for monitoring a condition of a mechanical bearing, wherein the bearing is coupled to an electric machine that is controlled by a frequency converter (32; 42; 52) controlling a rotating magnetic flux in the electric machine, **characterized in that** the method comprises:
calculating a frequency-domain representation of the angle of the magnetic flux on the basis of an estimated angle of the magnetic flux,
determining a magnitude of at least one fault signature in the calculated frequency-domain representation, wherein the at least one fault signature is formed by a predetermined selection of one or more frequency components of the angle of the magnetic flux in the calculated frequency-domain representation, and
determining the condition of the bearing on the basis of the magnitude of the at least one fault signature.

2. A method according to claim 1, wherein
a third harmonic component of the estimated angle represents the fault signature, and
the magnitude of the third harmonic component represents the magnitude of the at least one fault signature.

3. A method according to claim 1, wherein
a plurality of frequency components form a fault signature,
the frequency-domain representation is in the form of a spectrum of the angle comprising the plurality of frequency components, and
the magnitude of the fault signature is determined on the basis of the magnitudes of the plurality of frequency components.

4. A method according to any one of the preceding claims, wherein the determining of the condition comprises
comparing the determined magnitude of the fault signature with a reference level, and
if the determined magnitude exceeds the reference level, determining that the bearing has faulted.

5. A method according to claim 4, wherein the method comprises
performing an identification run with a healthy bearing,
determining a magnitude of a fault signature present in the healthy bearing,
determining the reference level for the fault signature on the basis of the determined magnitude.

6. A data analysis system (24) for carrying out the method as claimed in claim 1, the data analysis system (24) comprising three subunits; a frequency analysis unit (242), a fault signature detection unit (244), and a condition analysis unit (246).

7. A frequency converter comprising a data gathering unit (22; 322; 522) configured to
estimate the angle of a rotating magnetic flux of an electric machine arranged to be controlled by the frequency converter (32; 42; 52),
generate a time-domain representation of the angle of the magnetic flux on the basis of values of the estimated angle of the magnetic flux, and
cause the stored time-domain representation to be sent to a frequency analysis unit comprising means for carrying out a method for monitoring a condition of a mechanical bearing, wherein the bearing is coupled to an electric machine that is controlled by a frequency converter (32; 42; 52) controlling a rotating magnetic flux in the electric machine, and wherein the method comprises:
calculating a frequency-domain representation of the angle of the magnetic flux on the basis of an estimated angle of the magnetic flux, and
causing the frequency-domain representation to be sent to a system that is configured to
determine a magnitude of at least one fault signature in the calculated frequency-domain representation, wherein the at least one fault signature is formed by a predetermined selection of one or more frequency components of the angle of the magnetic flux in the calculated frequency-domain representation, and
determine the condition of the bearing on the basis of the magnitude of the at least one fault signature.

8. A frequency converter according to claim 7, wherein the frequency converter (32; 42; 52) further comprises the data analysis system (24; 54; 324).

9. A frequency converter according to claim 7, wherein the data analysis system is an external data analysis system (44; 54), and the frequency converter (32; 42; 52) comprises a connection unit (426; 526) for transmitting the time-domain representation to the external data analysis system (44; 54).

10. A frequency converter according to claim 7, wherein the data analysis system is an external data analysis system (44; 54), and the frequency converter (32; 42; 52) comprises a connection unit (426; 526) configured to
establish a connection with an external communication device (56), and
causing the time-domain representation to be sent to the external communication device (56) in order to be forwarded to the external data analysis system (44; 54).

11. A data analysis system according to claim 6, wherein the data analysis system (24; 54; 324) is implemented at least partially as an external cloud computing service.

12. A computer program having instructions which, when executed by a computing device or system, cause the computing device or system to perform the method according to any one of claims 1 to 5.

## Patentansprüche

1. Verfahren zum Überwachen eines Zustandes eines mechanischen Lagers, wobei das Lager an eine elektrische Maschine gekoppelt ist, die von einem Frequenzwandler (32; 42; 52) gesteuert wird, der einen Rotationsmagnetfluss in der elektrischen Maschine steuert, **dadurch gekennzeichnet, dass** das Verfahren Folgendes umfasst:
Berechnen einer Frequenzdomänenrepräsentation des Winkels des Magnetflusses auf Basis eines geschätzten Winkels des Magnetflusses,
Bestimmen einer Größe von mindestens einer Fehlersignatur in der berechneten Frequenzdomänenrepräsentation, wobei die mindestens eine Fehlersignatur durch eine vorbestimmte Auswahl von einer oder mehreren Frequenzkomponenten des Winkels des Magnetflusses in der berechneten Frequenzdomänenrepräsentation gebildet wird, und
Bestimmen des Zustandes des Lagers auf Basis der Größe der mindestens einen Fehlersignatur.

2. Verfahren nach Anspruch 1, wobei
eine dritte Oberschwingungskomponente des geschätzten Winkels die Fehlersignatur repräsentiert, und
die Größe der dritten Oberschwingungskomponente die Größe der mindestens einen Fehlersignatur repräsentiert.

3. Verfahren nach Anspruch 1, wobei
eine Vielzahl von Frequenzkomponenten eine Fehlersignatur bilden,
die Frequenzdomänenrepräsentation die Form eines Spektrums des Winkels, der die Vielzahl von Frequenzkomponenten umfasst, aufweist, und
die Größe der Fehlersignatur auf Basis der Größen der Vielzahl von Frequenzkomponenten bestimmt wird.

4. Verfahren nach einem der vorhergehenden Ansprüche, wobei das Bestimmen des Zustandes Folgendes umfasst
Vergleichen der bestimmten Größe der Fehlersignatur mit einem Referenzniveau, und
wenn die bestimmte Größe das Referenzniveau überschreitet, Bestimmen, dass das Lager defekt ist.

5. Verfahren nach Anspruch 4, wobei das Verfahren Folgendes umfasst
Durchführen eines Identifikationslaufs mit einem einwandfreien Lager,
Bestimmen einer Größe einer Fehlersignatur, die im einwandfreien Lager vorhanden ist,
Bestimmen des Referenzniveaus für die Fehlersignatur auf Basis der bestimmten Größe.

6. Datenanalysesystem (24) zum Umsetzen des in Anspruch 1 beanspruchten Verfahrens, wobei das Datenanalysesystem (24) drei Untereinheiten umfasst; eine Frequenzanalyseeinheit (242), eine Fehlersignaturdetektionseinheit (244), und eine Zustandsanalyseeinheit (246).

7. Frequenzwandler, der eine Datensammeleinheit (22; 322; 522) umfasst, die zu Folgendem ausgelegt ist
Schätzen des Winkels des Rotationsmagnetflusses einer elektrischen Maschine, die angeordnet ist, vom Frequenzwandler (32; 42; 52) gesteuert zu werden,
Erzeugen einer Zeitdomänenrepräsentation des Winkels des Magnetflusses auf Basis der Werte des geschätzten Winkels des Magnetflusses, und
Bewirken, dass die gespeicherte Zeitdomänenrepräsentation an eine Frequenzanalyseeinheit gesendet wird, die Mittel zum Umsetzen eines Verfahrens zum Überwachen eines Zustandes eines mechanischen Lagers umfasst, wobei das Lager an eine elektrische Maschine gekoppelt ist, die von einem Frequenzwandler (32; 42; 52) gesteuert wird, der einen Rotationsmagnetfluss in der elektrischen Maschine steuert, und wobei das Verfahren Folgendes umfasst:
Berechnen einer Frequenzdomänenrepräsentation des Winkels des Magnetflusses auf Basis eines geschätzten Winkels des Magnetflusses, und
Bewirken, dass die Frequenzdomänenrepräsentation an ein System gesendet wird, das zu Folgendem ausgelegt ist
Bestimmen einer Größe von mindestens einer Fehlersignatur in der berechneten Frequenzdomänenrepräsentation, wobei die mindestens eine Fehlersignatur durch eine vorbestimmte Auswahl von einer oder mehreren Frequenzkomponenten des Winkels des Magnetflusses in der berechneten Frequenzdomänenrepräsentation gebildet wird, und
Bestimmen des Zustandes des Lagers auf Basis der Größe der mindestens einen Fehlersignatur.

8. Frequenzwandler nach Anspruch 7, wobei der Frequenzwandler (32; 42; 52) ferner das Datenanalysesystem (24; 54; 324) umfasst.

9. Frequenzwandler nach Anspruch 7, wobei das Datenanalysesystem ein externes Datenanalysesystem (44; 54) ist, und der Frequenzwandler (32; 42; 52) eine Verbindungseinheit (426; 526) zum Übertragen der Zeitdomänenrepräsentation zum externen Datenanalysesystem (44; 54) umfasst.

10. Frequenzwandler nach Anspruch 7, wobei das Datenanalysesystem ein externes Datenanalysesystem (44; 54) ist, und der Frequenzwandler (32; 42; 52) eine Verbindungseinheit (426; 526) umfasst, die zu Folgendem ausgelegt ist
Herstellen einer Verbindung mit einer externen Kommunikationsvorrichtung (56), und
Bewirken, dass die Zeitdomänenrepräsentation an die externe Kommunikationsvorrichtung (56) gesendet wird, um zum externen Datenanalysesystem (44; 54) weitergeleitet zu werden.

11. Datenanalysesystem nach Anspruch 6, wobei das Datenanalysesystem (24; 54; 324) mindestens teilweise als ein externer Clouddatenverarbeitungsdienst implementiert ist.

12. Computerprogrammprodukt, das Anweisungen aufweist, die, wenn sie von einer Datenverarbeitungsvorrichtung oder einem Datenverarbeitungssystem ausgeführt werden, bewirken, dass die Datenverarbeitungsvorrichtung oder das Datenverarbeitungssystem das Verfahren nach einem der Ansprüche 1 bis 5 durchführt.

## Revendications

1. Procédé de surveillance d'un état d'un palier mécanique, dans lequel le palier est couplé à une machine électrique qui est commandée par un convertisseur de fréquence (32 ; 42 ; 52) commandant un flux magnétique rotatif dans la machine électrique, **caractérisé en ce que** le procédé consiste à :
calculer une représentation dans le domaine fréquentiel de l'angle du flux magnétique sur la base d'un angle estimé du flux magnétique,
déterminer une amplitude d'au moins une signature de défaillance dans la représentation dans le domaine fréquentiel calculée, dans lequel la au moins une signature de défaillance est formée par une sélection prédéterminée d'une ou de plusieurs composantes fréquentielles de l'angle du flux magnétique dans la représentation dans le domaine fréquentiel calculée, et
déterminer l'état du palier sur la base de l'amplitude de la au moins une signature de défaillance.

2. Procédé selon la revendication 1, dans lequel
une composante de troisième harmonique de l'angle estimé représente la signature de défaillance, et
l'amplitude de la composante de troisième harmonique représente l'amplitude de la au moins une signature de défaillance.

3. Procédé selon la revendication 1, dans lequel
une pluralité de composantes fréquentielles forment une signature de défaillance,
la représentation dans le domaine fréquentiel est sous la forme d'un spectre de l'angle comprenant la pluralité de composantes fréquentielles, et
l'amplitude de la signature de défaillance est déterminée sur la base des amplitudes de la pluralité de composantes fréquentielles.

4. Procédé selon l'une quelconque des revendications précédentes, dans lequel la détermination de l'état consiste à
comparer l'amplitude déterminée de la signature de défaillance avec un niveau de référence, et
si l'amplitude déterminée dépasse le niveau de référence, déterminer que le palier est défectueux.

5. Procédé selon la revendication 4, dans lequel le procédé consiste à
réaliser un passage d'identification avec un roulement sain,
déterminer une amplitude d'une signature de défaillance présente dans le roulement sain,
déterminer le niveau de référence pour la signature de défaillance sur la base de l'amplitude déterminée.

6. Système d'analyse de données (24) pour mettre en oeuvre le procédé selon la revendication 1, le système d'analyse de données (24) comprenant trois sous-unités ; une unité d'analyse fréquentielle (242), une unité de détection de signature de défaillance (244) et une unité d'analyse d'état (246) .

7. Convertisseur de fréquence comprenant une unité de collecte de données (22 ; 322 ; 522) configurée pour
estimer l'angle d'un flux magnétique rotatif d'une machine électrique conçue pour être commandée par le convertisseur de fréquence (32 ; 42 ; 52),
générer une représentation dans le domaine temporel de l'angle du flux magnétique sur la base de valeurs de l'angle estimé du flux magnétique, et
amener la représentation dans le domaine temporel stockée à être envoyée à une unité d'analyse fréquentielle comprenant des moyens pour mettre en oeuvre un procédé de surveillance d'un état d'un palier mécanique, dans lequel le palier est couplé à une machine électrique qui est commandée par un convertisseur de fréquence (32 ; 42 ; 52) qui commande un flux magnétique rotatif dans la machine électrique, et dans lequel le procédé consiste à :
calculer une représentation dans le domaine fréquentiel de l'angle du flux magnétique sur la base d'un angle estimé du flux magnétique, et
amener la représentation dans le domaine fréquentiel à être envoyée à un système configuré pour
déterminer une amplitude d'au moins une signature de défaillance dans la représentation dans le domaine fréquentiel calculée, dans lequel la au moins une signature de défaillance est formée par une sélection prédéterminée d'une ou de plusieurs composantes fréquentielles de l'angle du flux magnétique dans la représentation dans le domaine fréquentiel calculée, et
déterminer l'état du palier sur la base de l'amplitude de la au moins une signature de défaillance.

8. Convertisseur de fréquence selon la revendication 7, dans lequel le convertisseur de fréquence (32 ; 42 ; 52) comprend en outre le système d'analyse de données (24 ; 54 ; 324) .

9. Convertisseur de fréquence selon la revendication 7, dans lequel le système d'analyse de données est un système d'analyse de données externe (44 ; 54), et le convertisseur de fréquence (32 ; 42 ; 52) comprend une unité de connexion (426 ; 526) pour transmettre la représentation dans le domaine temporel au système externe d'analyse de données (44 ; 54).

10. Convertisseur de fréquence selon la revendication 7, dans lequel le système d'analyse de données est un système d'analyse de données externe (44 ; 54), et le convertisseur de fréquence (32 ; 42 ; 52) comprend une unité de connexion (426 ; 526) configurée pour
établir une connexion avec un dispositif de communication externe (56), et
amener la représentation dans le domaine temporel à être envoyée au dispositif de communication externe (56) afin d'être transférée au système d'analyse de données externe (44 ; 54).

11. Système d'analyse de données selon la revendication 6, dans lequel le système d'analyse de données (24 ; 54 ; 324) est implémenté au moins partiellement en tant que service informatique en nuage externe.

12. Programme d'ordinateur ayant des instructions qui, lorsqu'elles sont exécutées par un dispositif ou système informatique, amènent le dispositif ou système informatique à réaliser le procédé selon l'une quelconque des revendications 1 à 5.
